# EUROPÄISCHE PATENTSCHRIFT

(11) **EP 1 671 519 B1**
(45) Veröffentlichungstag und Bekanntmachung des Hinweises auf die Patenterteilung: **20.06.2007**
(21) Anmeldenummer: 04765799.4
(22) Anmeldetag: 05.10.2004
(51) Int. Cl.: H05B 3/68, A47J 39/00, A47J 39/02, A47J 47/14

(54) **ANORDNUNG ZUM ERWÄRMEN VON SPEISEN**
ARRANGEMENT FOR HEATING FOOD
ENSEMBLE POUR CHAUFFER DES ALIMENTS

(30) Priorität: 09.10.2003 DE 10347634
(43) Veröffentlichungstag der Anmeldung: 21.06.2006
(73) Patentinhaber: INNOVAT Gesellschaft für Sondermaschinenbau, Mess- und Steuerungstechnik mbH, 77963 Schwanau (DE)
(72) Erfinder: IRION, Ingo, 77963 Schwanau (DE); HESS, Jörg, 77974 Meissenheim (DE)
(74) Vertreter: Wolf, Eckhard
(86) Internationale Anmeldenummer: PCT/EP2004/011067
(87) Internationale Veröffentlichungsnummer: WO 2005/036932

(56) Entgegenhaltungen:
- EP-A- 1 172 047
- EP-A- 1 260 167
- WO-A-91/02478
- US-A- 4 323 110
- US-A- 5 396 046
- US-A- 6 120 819
- US-B1- 6 658 994

## Beschreibung

Die Erfindung betrifft eine Anordnung zum Erwärmen von Speisen mit einem Speiseverteilerwagen zur Aufnahme mindestens einer über einen Anschluss an eine externe Stromversorgung angeschlossenen Heizeinrichtung und mindestens eines Speisetabletts, sowie mit mindestens einer einen Microcontroller enthaltenden Regeleinrichtung zur automatischen Kontrolle des Erwärmungsvorgangs, die einen extern ansteuerbaren Transponder umfasst, der mit einem auch durch den Microcontroller beschreib- und auslesbaren Schreib-/Lese-Speicher verbunden ist. Weiter betrifft die Erfindung ein Verfahren zum Regenerieren von vorgegarten und auf eine Lagertemperatur abgekühlten Speisen durch Wärmezufuhr über eine mit einem Speisetablett verbundene transportable Heizeinrichtung.

Bei der Zubereitung und Verteilung von Speisen in Krankenhäusern, Altenheimen und ähnlichen Einrichtungen ist ein Abkühlen der Speisen auf dem Transportweg zu vermeiden. Zu diesem Zweck werden häufig Speisetablett-Transportwagen verwendet, die ein elektrisches oder induktives Erwärmungssystem zum Aufwärmen und Warmhalten der Speisen enthalten. Insbesondere werden hierbei vorbereitete Speiseportionen in vorgegartem Zustand regeneriert, d. h. von einer Kühltemperatur im Bereich von 2 °C bis 10 °C auf eine Kerntemperatur von etwa 75 °C aufgeheizt. Diese Kerntemperatur darf vorschriftsgemäß aus hygienischen Gründen nicht unterschritten werden, andererseits ist aber auch eine übermäßige Erhitzung der Speisen über einen längeren Zeitraum zu vermeiden, da dies die Qualität der Speisen beeinträchtigen würde. Die microcontrollergestützte Regeleinrichtung sorgt bei den bekannten Speisenenwärmungssystemen dafür, dass die Heizphase rasch durchschritten wird und dass vorgegebene Grenztemperaturen nicht unter- bzw. überschritten werden (DE-A 197 14 701). Bei den bekannten Erwärmungssystemen werden die Regelparameter entweder konstant gehalten oder sie müssen individuell an den zu einem bestimmten Tablett gehörenden Heizeinrichtungen eingestellt werden. Im ersteren Falle kann es bei Abweichungen in der Speisenmenge und der Art der Speisen zu unerwünschten Unregelmäßigkeiten beim Erwärmungsvorgang kommen, während im letzteren Falle ein erheblicher Zeitaufwand für die vorzunehmenden Einstellungen erforderlich ist. Dies gilt um so mehr, wenn eine Vielzahl von Heizeinrichtungen mit vielen individuell angepassten Speisen und Speisenmengen im Einsatz sind. Dazu kommen die Zuordnungsprobleme der einzelnen Speisentabletts, die bisher durch Anbringen von handgeschriebenen Zetteln bewältigt wurden. Bei der gegebenen Hektik im Zuge der Speisenverteilung sind dennoch Fehlzuordnungen von Speisen an Personen sowie Fehler bei der Diätüberwachung unvermeidlich.

Bei einer bekannten Anordnung der eingangs angegebenen Art (EP 1 172 047 A1) sind die Heizeinrichtungen fest in den Speiseverteilerwagen eingesetzt, während die Speisetabletts zum Aufheizen der Speisen lose auf eine der Heizeinrichtungen aufgestellt werden. Die Regeleinrichtung mit einem Transponder und einer Schreib-/Lese-Einrichtung ist dort am Speiseverteilerwagen angeordnet und damit für alle Heizeinrichtungen nur einmal vorhanden. Die Heizeinrichtungen können zwar im Einzelnen über die gemeinsame Regeleinrichtung angesteuert werden. Da die Speisetabletts jedoch beliebig in die Fächer eingestellt werden können, müssen für ihre Zuordnung zu den einzelnen Heizeinrichtungen besondere Vorkehrungen getroffen werden. Die Zuordnung lässt sich nicht allein über die Regeleinrichtung bewerkstelligen, da mit den Speisetabletts als solchen kein Informationsaustausch über den Transponder möglich ist.

Ausgehend hiervon liegt der Erfindung die Aufgabe zugrunde, eine Anordnung der eingangs angegebenen Art zu entwickeln, mit der ein Informationsaustausch mit den Speisetabletts als solchen möglich ist und eine Verwechslung der Speisetabletts vermieden wird.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt primär der Gedanke zugrunde, dass die einer jeden vorbereiteten Speise zugrunde liegenden Betriebs- und Individualparameter beim Regenerationsvorgang einer Speise und beim anschließenden Warmhalten berücksichtigt werden sollten und dass die Parameter auf einfache Weise dem Microcontroller einer individuellen transportablen Heizeinrichtung zur Verfügung stehen sollten. Um dies zu erreichen, wird gemäß der Erfindung primär vorgeschlagen, dass das Speisetablett eine aus mindestens einer Heizplatte bestehende Heizeinrichtung mit Micro-controller und Schreib-/Lese-Speicher sowie einen Transponder trägt, und dass ein computergestützter Transceiver über den Transponder des Speisetabletts unter Austausch von Betriebs- und Individualparametern sowie von Prozessdaten des Erwärmungsvorgangs mit den zugehörigen Schreib-/Lese-Speichern kommuniziert. Der Transceiver versorgt die Transponder zweckmäßig auch mit der für deren Betrieb erforderlichen elektrischen Energie.

Der Transceiver ist primär mit einer externen Programmier und Lese-Einheit verbunden, über die die Schreib-/Lese-Einheit der transportablen Heizeinrichtung programmierbar und zu Auswertungszwecken auslesbar ist.

Weiter kann die transportable Heizeinrichtung mit einer externen Speiseabgabeeinheit kommunizieren, wenn diese mit einem auf den Transponder der Heizeinrichtung ansprechenden Transceiver verbunden ist und ein auf Daten aus dem Schreib-/Lese-Speicher der transportablen Heizeinrichtung ansprechendes System zur positions- und/oder mengengesteuerten Abgabe von Speisen und Getränken auf einen die transportable Heizeinrichtung enthaltenden Träger aufweist. In diesem Falle werden im Datenspeicher der Heizeinrichtung Angaben abgespeichert, die zur Ansteuerung der Speisenabgabe verwendet werden können. Zu solchen Angaben gehören u. a. Art und Menge der Speisen, die auf einzelne Garstellen oder Trägerplätze ausgegeben werden, einschließlich des hierfür eventuell notwendigen Bestecks oder Geschirrs, und zugehörige Getränke. Damit ist eine vollständige Automatisierung der Speisenabgabe möglich.

Vorteilhafterweise weist die transportable Heizeinrichtung mindestens eine an eine externe Stromversorgung anschließbare Heizplatte auf, die gemäß einer bevorzugten Ausgestaltung der Erfindung aus einer Metallplatte hoher Wärmeleitfähigkeit besteht, auf die eine elektrisch isolierende Folie aufkaschiert ist, die eine aufgedruckte, einen Heizwiderstand bildende Leiterbahnstruktur trägt und in flächig ausgedehntem thermischem Kontakt mit einer Breitseite der Metallplatte steht. Die Metallplatte enthält zweckmäßig ein Metall aus der Gruppe Kupfer oder Aluminium oder besteht aus einem dieser Metalle. Um einen ausreichenden Wärmedurchgang durch die Metallplatte und dennoch eine gleichmäßige Wärmeverteilung in der

Plattenebene zu erhalten, wird gemäß einer vorteilhaften Ausgestaltung der Erfindung vorgeschlagen, dass die Metallplatte eine Wandstärke von 1 mm bis 5 mm, vorzugsweise von 2 mm bis 3 mm, aufweist. Um dazu eine genaue Temperaturüberwachung zu ermöglichen, trägt die Heizplatte einen Temperatursensor, der über eine Meßschaltung mit Analog/Digitalwandler an den Microcontroller angeschlossen ist. Der Temperatursensor ist dabei zweckmäßig im Zentrum der Heizplatte angeordnet und über auf die Folie aufgedruckte Leiterbahnen mit der Meßschaltung verbunden. Die Stromversorgung der Heizplatte weist zweckmäßig eine Konstantspannungsquelle auf, deren Heizstrom über einen im Heizkreis angeordneten, durch den Microprozessor ansteuerbaren elektronischen Schalter unter Variation der Heizleistung gepulst ein- und ausschaltbar ist. Die Konstantspannungsquelle ist dabei vorteilhafterweise als Niederspannungsquelle ausgebildet, die eine stromunabhängige konstante Spannung von 12 V bis 42 V liefert.

Um unterschiedliche Speisen mit verschiedenen Aufheizcharakteristiken zielgenau erwärmen zu können, weist die Heizeinrichtung mindestens zwei Heizplatten vorzugsweise unterschiedlicher Größe auf, denen jeweils ein eigener Satz Betriebsparameter für den Erwärmungsvorgang zugeordnet ist.

Eine weitere bevorzugte Ausgestaltung der Erfindung sieht vor, dass die transportable Heizeinrichtung in einem Isolierkörper aus Kunststoff vorzugsweise austauschbar angeordnet ist. Der Isolierkörper kann dabei eine an die Kontur der Heizeinrichtung angepasste Aufnahmemulde aufweisen.

Mit den erfindungsgemäßen Maßnahmen ist es möglich, die Prozeßdaten während des Erwärmungsvorgangs zu speichern und zu einem späteren Zeitpunkt aus dem Schreib-/Lese-Speicher vorzugsweise über den Transceiver und den durch diesen angesprochenen Transponder in einen externen Computer auszulesen.

Eine bevorzugte Ausgestaltung der Erfindung sieht vor, dass eine Microcontroller-Routine zur Ermittlung eines nach Maßgabe vorgegebener Betriebsparameter errechneten theoretischen Temperatur/Zeitvenaufs und zum Vergleich mit den gemessenen Ist-Werten in Abhängigkeit von der Zeit vorgesehen ist, wobei bei Auftreten einer über einem vorgegebenen Schwellenwert liegenden Abweichung zwischen den beiden Erwärmungskurven ein Alarm auslösbar ist. Eine zu schnelle Erwärmung könnte bedeuten, dass ein fehlerhafter Wärmekontakt zwischen Heizeinrichtung und Speisengefäß besteht oder dass das Speisengefäß fehlt oder keine oder eine falsche Speise enthält. Ein zu langsames Erwärmen deutet auf eine falsche Speise oder eine zu große Speisenmenge hin. Im Alarmfall kann die Heizeinrichtung selbsttätig abgeschattet und/oder ein akustischer oder optischer Alarm ausgelöst werden.

Weiter bezieht sich die Erfindung auf ein Verfahren zum Regenerieren von vorgegarten und auf eine Lagertemperatur abgekühlten Speisen durch Wärmezufuhr über eine transportable Heizeinrichtung. Um viele unterschiedliche Speisen und Speisenmengen optimal aufheizen zu können, wird gemäß der Erfindung vorgeschlagen, dass vor Beginn eines Erwärmungsvorgangs Betriebs- und Individualparameter drahtlos, vorzugsweise über einen Transponder, in einen der Heizeinrichtung zugeordneten Schreib-/Lese-Speicher eingelesen werden und von dort zur Programmierung des Erwärmungsvorgangs über einen Microprozessor ausgelesen werden, dass während des Erwärmungsvorgangs die Temperatur des Heizelements in Abhängigkeit von der Zeit gemessen wird. Vorteilhafterweise wird die einen Speisebehälter tragende Heizeinrichtung während einer Aufheizphase bei maximaler Heizleistung bis zu einer durch die Betriebsparameter vorgegebenen Maximaltemperatur aufgeheizt. Anschließend wird während einer Garphase die vorgegebene Maximaltemperatur über eine durch die Betriebsparameter vorgegebene Zeit durch Variation eines Tastverhältnisses zwischen Heizen und Heizpausen der Wärmezufuhr geregelt, wobei anschließend während einer Warmhaltephase durch Zurücknehmen des Tastvefiältnisses Heizen/Pausen die Temperatur auf eine gegenüber der Gartemperatur abgesenkte Temperatur reduziert wird.

Eine weitere bevorzugte Ausgestaltung der Erfindung sieht vor, dass die Steigung der gemessenen Temperatur2eit-Kurve während der Aufheizphase ermittelt und mit aufgrund vorgegebener Betriebsparameter ermittelter Sollwerte unter Bildung eines Abweichungswertes verglichen wird, wobei bei Über- oder Unterschreiten eines vorgegebenen Schwellenwerts eine Alarmroutine ausgelöst wird. Die gemessenen Temperaturwerte werden in Abhängigkeit von der Zeit in einem Schreib-/Lese-Speicher in extern abrufbarer Form abgelegt. Außerdem werden in dem Schreib-/Lese-Speicher über den Transponder individuelle Zuordnungsparameter in abrufbarer Form abgelegt.

Im Folgenden wird die Erfindung anhand eines in der Zeichnung in schematischer Weise dargestellten Ausführungsbeispiels näher erläutert. Es zeigen
- Fig. 1: eine schaubildliche Darstellung einer Heizeinrichtung mit drei elektrisch beheizbaren Heizplatten und Elektronikgehäuse mit Stromanschlüssen;
- Fig. 2: eine Rückseitenansicht einer Heizplatte der Heizeinrichtung nach Fig. 1;
- Fig. 3: ein tablettartiges Kunsttofformteil mit Aufnahme für die Heizeinrichtung;
- Fig. 4: ein Tablett mit Heizeinrichtung und Gefäßen zur Aufnahme von Speisen;
- Fig. 5: ein Blockschaltbild der Heizeinrichtung mit Regelelektronik sowie drahtloser Daten- und Energieübertragung;
- Fig. 6: ein Blockschaltbild der transportablen Heizeinrichtung mit mehreren Garstellen und einer über die Heizeinrichtung drahtlos ansteuerbaren Speisenabgabeeinheit;
- Fig. 7: ein Flussdiagramm des Gesamtablaufs des Regenerierungsprozesses;
- Fig. 8: ein Diagramm des Zeitverlaufs der Plattentemperatur, der Garguttemperatur und der zugeführten elektrischen Leistung während des Erwärmungsprozesses.

Die in der Zeichnung dargestellte Anordnung, bestehend aus einer Heizeinrichtung 10 mit Heizplatten 12 und einem als Kunststofformteil ausgebildeten Tablett 14 ist zum Erwärmen von Speisen bestimmt, die in unterschiedlichen Gefäßen 16', 16", 16'" angeordnet sein können. Die Gefäße 16', 16" stehen in unmittelbarem Wärmekontakt mit den Heizplatten 12 und werden von diesen zusammen mit den darin befindlichen Speisen nach einem unten näher erläuterten Schema erwärmt.

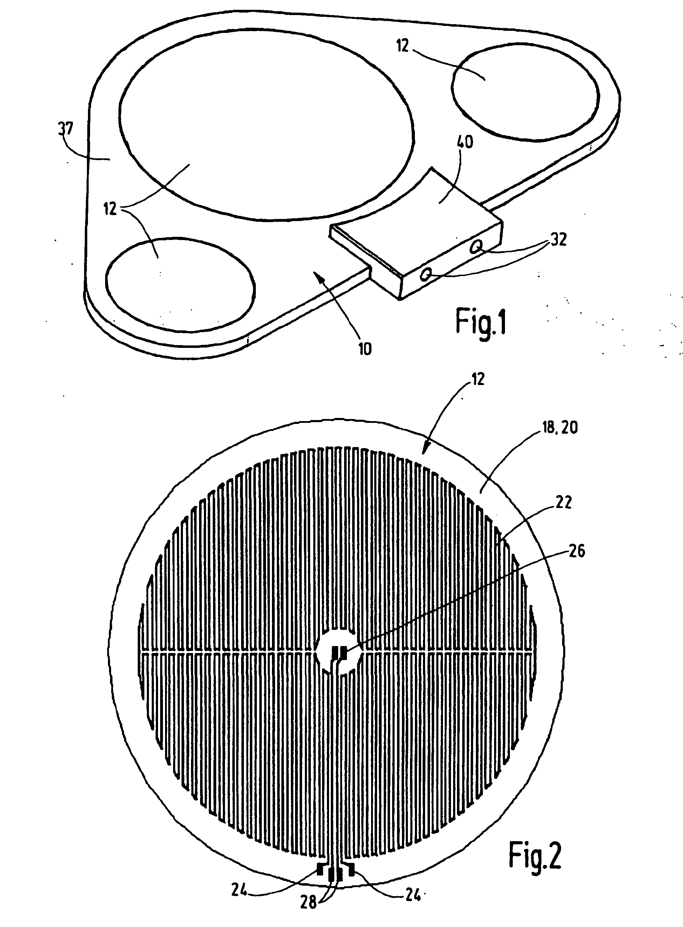

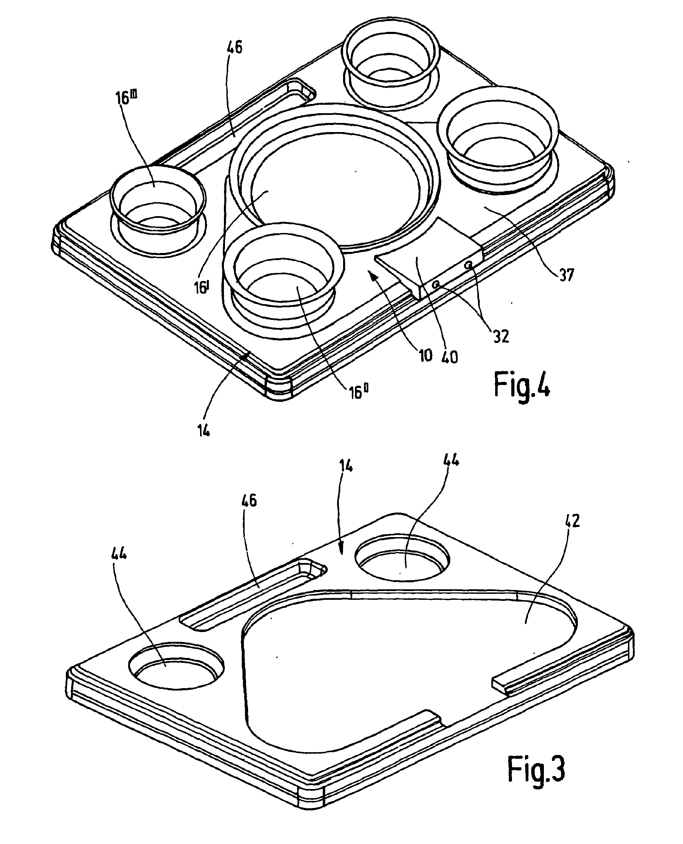

Die Heizplatten 12 bestehen aus Kupfer- oder Aluminiumplatten mit kreisförmigem Umriss und einer Wandstärke von 2 mm bis 3 mm, die auf ihrer rückwärtigen Breitseftenfläche mit einer elektrisch isolierenden Folien 20 flächig verbunden ist. Die Folie 20 trägt auf ihrer Rückseite einen mehrfach mäanderförmigen Leiterbahnaufdruck 22 mit Kreiskontur, der die Funktion eines Heizwiderstands besitzt und der über die Kontaktstellen 24 mit elektrischem Strom im Niedervoltbereich von ca. 42 V beaufschlagbar ist. Die in der Leiterbahn 22 entwickelte Wärme gelangt über die gesamte Leiterbahnfläche aufgrund der Wärmeleitung über die temperaturfeste dünne Folie 20 zur Metallplatte 18 und führt dort aufgrund der guten Wärmeleitfähigkeit zu einer gleichmäßigen Temperaturverteilung über die gesamte Plattenoberfläche. Die Folie 20 enthält außerdem miteinander paarweise durch Leiterbahnen verbundene Kontaktstellen 26, 28, von denen die zentralen Kontaktstellen 26 mit einem Temperatursensor 29 bestückbar sind, dessen Ausgangssignale an den Kontaktstellen 28 von einer Messelektronik mit Microcontroller 30 abgreifbar sind. Die Stromversorgung der in der Heizeinrichtung 10 angeordneten Heizplatten erfolgt über die in Fig. 1 dargestellten Kontaktstellen 32, die an eine externe Niedervolt-Stromversorgung 34, beispielsweise in einem Speiseverteilerwagen, anschließbar sind. In dem Heizkreis 35 befindet sich zusätzlich ein elektronischer Schalter 36, der über den Microcontroller 30 der Regeleinrichtung 38 ansteuerbar ist. Die Stromversorgungseinrichtung 34 liefert eine konstante Spannung unabhängig vom Verbraucherstrom. Dementsprechend wird die Leistung durch periodisches Ein- und Ausschalten des Heizstromes über den Schalter 36 durch den Microcontroller 30 gesteuert. Dabei bestimmt das Tastverhältnis zwischen dem "Ein"- und "Aus"-Zustand des Schalters die Heizleistung in der Heizplatte 12. "Ein" bedeutet dabei "Heizen", während "Aus" eine "Heizpause" bedeutet. Jede der drei Heizplatten besitzt einen eigenen Heizkreis 35, der Ober den Microcontroller und einen eigenen Schalter 36 ein- und ausschaltbar ist. Die Heizplatten 12 der Heizeinrichtung 10 sind in runde Ausnehmungen einer Grundplatte 37 aus einem bis mindestens 130 °C stabilen Kunststoff eingebettet. Die Grundplatte 37 trägt zusätzlich das die Regeleinrichtung 38 für die drei Heizplatten 12 vorgesehene Gehäuse 40 mit den Kontaktstellen 32 für die Stromversorgung. Das als Kunststofformteil ausgebildete Tablett 14 weist eine an die Kontur der Grundplatte 37 mit Gehäuse 40 angepaßte Aufnahme 42 auf (Fig. 3), in die die Heizeinrichtung 10 mit ihrer Grundplatte 37 einsetzbar ist (Fig. 4). Außerdem enthält das Tablett 14 noch einige Vertiefungen 44, 46 zur Aufnahme der Gefäße 16" und von nicht dargestelltem Besteck. Das Tablett wird beim Erwärmungsvorgang von einem nicht dargestellten, wärmeisolierenden Deckel übergriffen, der nur die Kontaktstellen 32 der Heizeinrichtung 10 freiläßt.

Eine Besonderheit der Heizeinrichtung besteht darin, dass der gesamte Ablauf des Erwärmungsprozesses allein über geeignete Programme im Microcontroller 30 geregelt wird. Dazu müssen dem System die für den Aufheizvorgang notwendigen Betriebsparameter übermittelt werden. Dabei ist zu berücksichtigen, dass je nach Speisenart, Speisenmenge und Garzustand der Speisen unterschiedliche Betriebsparameter und Programmroutinen benötigt werden. Die Vielzahl der unterschiedlichen Garvorgänge resultiert auch aus den verschiedenen Diätvorschriften, denen die Empfänger der Speisen unterliegen können. All dies bedarf einer intelligenten Datenerfassung und -verarbeitung in der beschriebenen Regeleinrichtung 38.

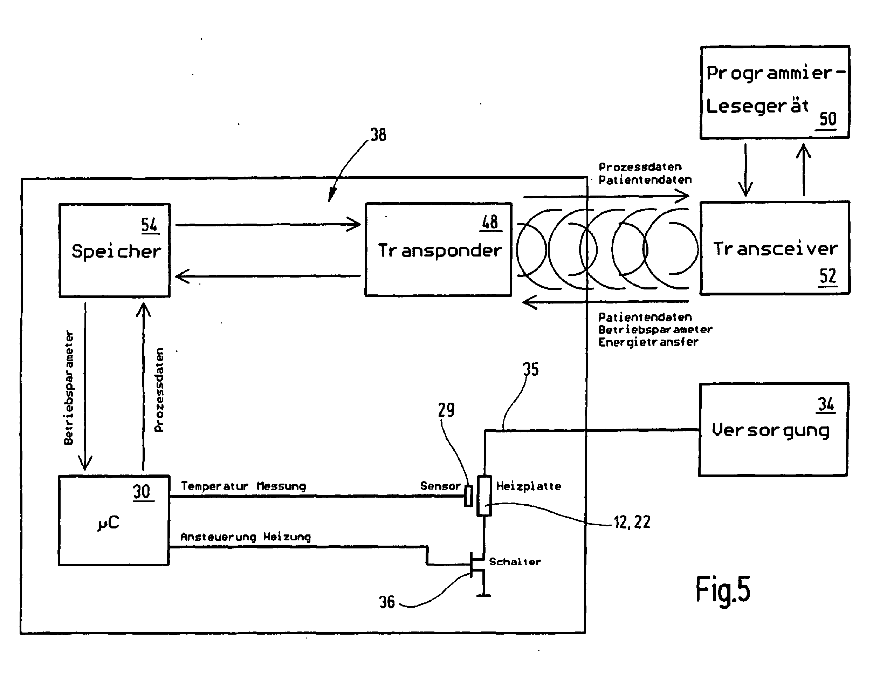

Bei dem in Fig. 5 gezeigten Ausführungsbeispiel umfasst die Regeleinrichtung 38 einen Transponder 48, der über einen externen, durch ein Programmier- und Lesegerät 50 ansteuerbaren Transceiver 52 ansteuerbar ist. Auch die für den Betrieb des Transponders 48 erforderliche elektrische Energie wird vom Transceiver 52 drahtlos übertragen. Der Transponder 48 steht seinerseits in Kontakt mit dem Schreib-/Lese-Speicher 54, dessen Speicherdaten auch vom Microcontroller 30 abgerufen werden können.

Die vor Beginn eines Erwärmungsprozesses drahtlos vom Transceiver 52 auf den Transponder 48 und von dort zum Schreib-/Lese-Speicher 54 übertragenen Daten sind zum einen Konsumenten- oder Patientendaten, wie Name, Zimmemummer, Station sowie Diätart oder Speiseplan, und zum anderen Betriebsdaten, zu denen das durchzuführende Garprogramm, wie Regenerieren, Warmhalten oder Kaltbelassen einzelner Heizplatten, eine Garkennziffer, Art und Menge der Speise, Gartemperaturen, Garzeiten, Warmhaltetemperaturen und Warmhaltezeiten gehören.

Zur Regelung des Erwärmungsprozesses werden diese Daten über den Microcontroller 30 aus dem Speicher ausgelesen und als Eingabedaten für die im Microcontroller vorhandene Software verwendet.

Während des Erwärmungsprozesses können über den Microcontroller 30 prozessrelevante Daten im Schreib-/Lese-Speicher 54 abgelegt und zu einem späteren Zeitpunkt beispielsweise über den Transponder und den Transceiver zur Auswertung in einem externen Computer ausgelesen werden. Prozeßdaten sind beispielsweise Uhrzeit und Datum im Zeitpunkt des Starts, die Starttemperatur, die Dauer der Aufheizphase, der Garphase und der Warmhaltephase, der Leistungsbedarf beim Garen und Warmhalten, die Uhrzeit und die Plattentemperatur am Ende der Warmhaltephase sowie eventuell Zwischentemperaturen in Abhängigkeit von der Zeit. Hinzu kommen Statusmeldungen, wie unbenutzter Stellplatz oder sonstige Fehlermeldungen, die einer eventuellen Überprüfung bedürfen.

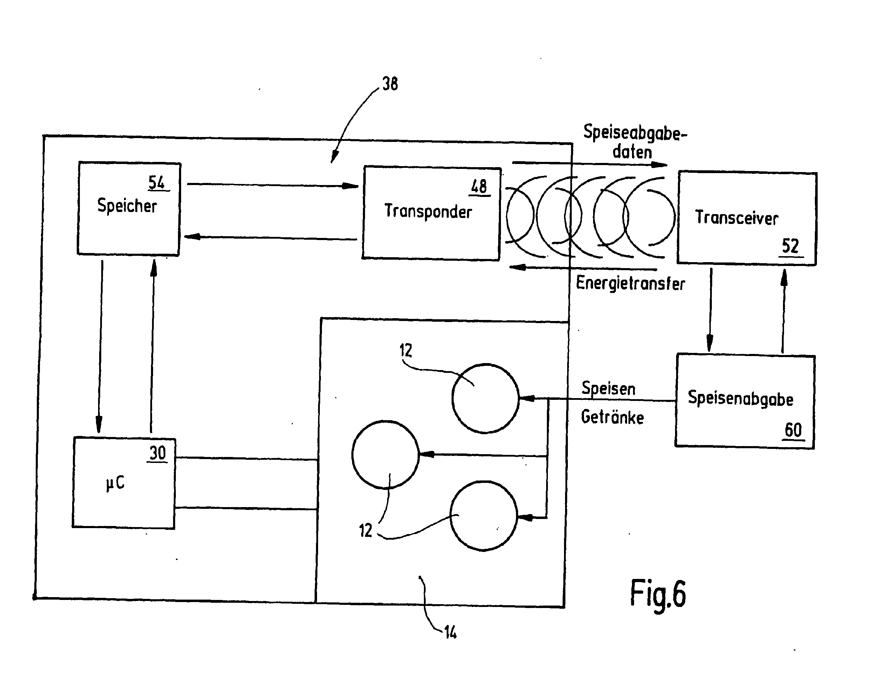

Das in Fig. 6 dargestellte Blockschaltbild zeigt ein Anwendungsbeispiel für die ferngesteuerte Speisenabgabe. Die Regeleinrichtung 38 der transportablen Heizeinrichtung umfasst einen Transponder 48, der über einen externen Transceiver 52 ansteuerbar ist. Auch die für den Betrieb des Transponders 48 erforderliche elektrische Energie wird vom Transceiver 52 drahtlos übertragen. Der Transponder 48 steht seinerseits in Kontakt mit dem Schreib-/Lese-Speicher 54, dessen Speicherdaten auch vom Mikrocontroller 30 abgerufen werden können. Der Transceiver 52 ist in diesem Fall Bestandteil einer Speisenabgabeeinheit 60, die verschiedene Garstellen 12 der transportablen Heizeinrichtung mit Speisen beschickt. Grundsätzlich können auf dem Träger der Heizeinrichtung 10 auch Getränke oder Bestecke über die Speiseabgabeeinheit abgelegt werden. Art und Menge der Speisen sowie die in Betracht kommenden Positionen auf dem Heizeinrichtungsträger werden von der Speiseabgabeeinheit über den Transceiver aus dem Speicher 54 der Heizeinrichtung abgerufen. Zu diesem Zweck wird der Transponder 48 über den Transceiver 52 drahtlos angesteuert und mit Energie versorgt.

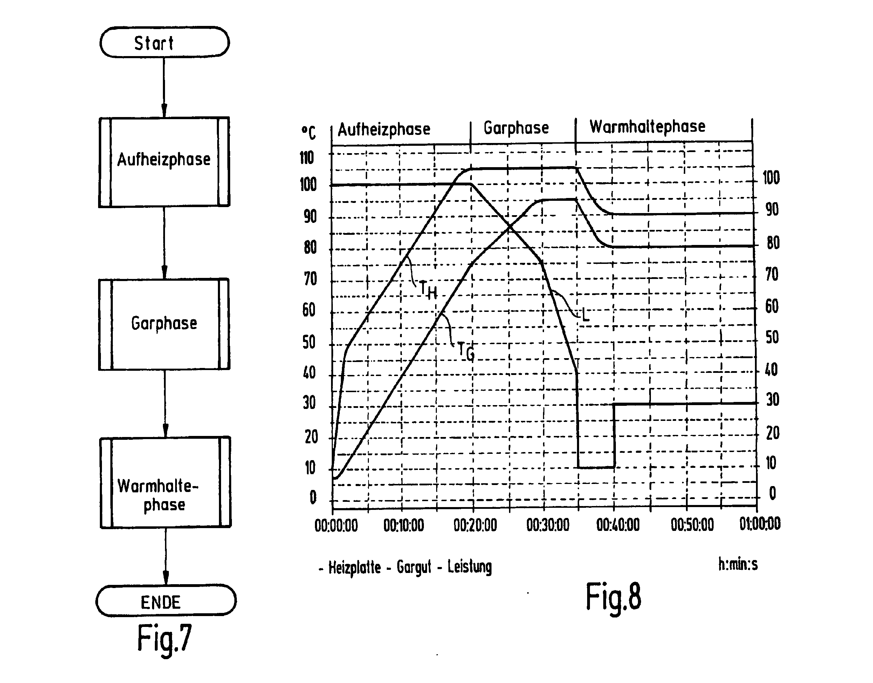

Mit der beschriebenen Anordnung werden üblicherweise vorgegarte Speisen, die auf Lagertemperatur abgekühlt wurden, aufgeheizt, zu Ende gegart und für den Verzehr warmgehalten. Der Erwärmungsprozeß läuft also nach dem in dem Flußdiagramm nach Fig. 7 dargestellten Schema ab. Danach wird die Heizplatte 12 zunächst in einer Aufheizphase auf eine vorgeschriebene Gartemperatur gebracht, die während der Garphase konstant gehalten wird und in einer anschließenden Warmhaltephase auf einen niedrigeren Wert abgesenkt wird. Das in dem Gefäß 16', 16" befindliche Gargut folgt mit seiner Temperatur dem Temperaturverlauf in der Heizplatte mit einer durch den Wärmeübergang bedingten Verzögerung, bis auch dort in der Garphase eine maximale Gartemperatur erreicht wird. Nach Ablauf der Garphase wird die Temperatur im Gargut auf einen Wert zurückgefahren, in welchem kein Garprozeß mehr stattfindet.

Der zeitliche Verlauf der Temperaturen in der Heizplatte und im Gargut ist in Fig. 8 in den Kurven H und G dargestellt. Weiter findet sich dort eine Kurve L, die den Verlauf der Heizleistung während des Erwärmungsprozesses in einem Prozent-Maßstab bezogen auf die Leistung in der Heizphase zeigt. Die Leistungsreduzierung in der Garphase und in der Warmhaltephase erfolgt durch Variation des Tastverhältnisses im Heizkreis über den elektronischen Schalter 36.

Zusammenfassend ist folgendes festzuhalten: Die Erfindung bezieht sich auf eine Anordnung zum Erwärmen von Speisen mit einer transportablen Heizeinrichtung 10 und einer einen Microcontroller enthaltenden Regeleinrichtung 38 zur automatischen Kontrolle des Erwärmungsvorgangs. Um eine zuverlässige Erwärmungskontrolle auch unterschiedlicher Arten und Mengen von Speisen zu ermöglichen, wird gemäß der Erfindung vorgeschlagen, dass die Regeleinrichtung 38 einen extern ansteuerbaren Transponder 48 umfaßt, der mit einem auch durch den Microcontroller 30 beschreib- und auslesbaren Schreib-/Lese-Speicher 54 verbunden ist.

## Patentansprüche

1. Anordnung zum Erwärmen von Speisen mit einem Speiseverteilerwagen zur Aufnahme mindestens einer über einen Anschluss an eine externe Stromversorgung angeschlossenen Heizeinrichtung (10) und mindestens eines Speisetabletts, sowie mit mindestens einer einen Microcontroller enthaltenden Regeleinrichtung zur automatischen Kontrolle des Erwärmungsvorgangs, die einen extern ansteuerbaren Transponder umfasst, der mit einem auch durch den Microcontroller beschreib- und auslesbaren Schreib-/Lese-Speicher (54) verbunden ist, **dadurch gekennzeichnet, dass** das Speisetablett eine aus mindestens einer Heizplatte bestehende Heizeinrichtung (10) mit Microcontroller und Schreib-/Lese-Speicher (54) sowie einen Transponder (48) trägt, und dass ein computergestützter Transceiver (52) über den Transponder (48) des Speisetabletts unter Austausch von Betriebs- und Individualparametern sowie von Prozessdaten des Erwärmungsvorgangs mit den zugehörigen Schreib-/Lese-Speichern (54) kommuniziert.

2. Anordnung nach Anspruch 1, **dadurch gekennzeichnet, dass** der Transceiver (52) mit einer externen Programmier- und Leseeinheit (50) verbunden ist.

3. Anordnung nach Anspruch 1, **dadurch gekennzeichnet, dass** der Transceiver (52) mit einer externen Speiseabgabeeinheit (60) verbunden ist die ein auf Daten aus den Schreib-/Lese-Speichern der Speisetabletts ansprechendes System zur positions- und mengengesteuerten Abgabe von Speisen und/oder Getränken auf das Speisetablett (14) aufweist.

4. Anordnung nach einem der Ansprüche 1 bis 3, **dadurch gekennzeichnet, dass** die mindestens eine Heizplatte (12) der Heizeinrichtung eine Metallplatte (18) hoher Wärmeleitfähigkeit aufweist, auf die eine elektrisch isolierende Folie (20) mit aufgedruckter, einen Heizwiderstand bildender Leiterbahnstruktur (22) in flächig ausgedehntem thermischem Kontakt aufkaschiert ist.

5. Anordnung nach Anspruch 4, **dadurch gekennzeichnet, dass** die Metallplatte (18) ein Metall aus der Gruppe Kupfer oder Aluminium enthält oder aus diesem besteht.

6. Anordnung nach Anspruch 4 oder 5, **dadurch gekennzeichnet, dass** die Metallplatte (18) eine Wandstärke von 1 mm bis 5 mm aufweist.

7. Anordnung nach Anspruch 6, **dadurch gekennzeichnet, dass** die Wandstärke 2 mm bis 3 mm beträgt.

8. Anordnung nach einem der Ansprüche 1 bis 7, **dadurch gekennzeichnet, dass** die Heizeinrichtung (10) eine Grundplatte (37) zur Aufnahme der mindestens einen Heizplatte (12) und der Regeleinrichtung (38) aufweist.

9. Anordnung nach einem der Ansprüche 1 bis 8, **dadurch gekennzeichnet, dass** die Heizeinrichtung (10) mit ihrer Grundplatte (37) in dem als Isolierkörper ausgebildeten Speisetabletts austauschbar angeordnet ist.

10. Anordnung nach Anspruch 9, **dadurch gekennzeichnet, dass** der Isolierkörper eine an die Kontur der Grundplatte (37) angepasste Aufnahmemulde (42) aufweist.

11. Anordnung nach einem der Ansprüche 1 bis 10, **dadurch gekennzeichnet, dass** die Heizplatte (12) einen Temperatursensor (29) trägt, der über eine Messschaltung an den zugehörigen Microcontroller (30) angeschlossen ist.

12. Anordnung nach Anspruch 11, **dadurch gekennzeichnet, dass** der Temperatursensor (29) im Zentrum der Heizplatte (12) angeordnet und über auf der Folie (20) aufgedruckte Leiterbahnen mit der Messschaltung verbunden ist.

13. Anordnung nach einem der Ansprüche 1 bis 12, **dadurch gekennzeichnet, dass** die Stromversorgung (34) der mindestens einen Heizeinrichtung (10) eine Konstantspannungsquelle aufweist, deren Heizstrom über einen im Heizkreis angeordneten, durch den jeweiligen Microcontroller (30) ansteuerbaren Schalter (36) unter Variation der Heizleistung gepulst ein- und ausschaltbar ist.

14. Anordnung nach Anspruch 13, **dadurch gekennzeichnet, dass** die Konstantspannungsquelle eine stromunabhängige konstante Spannung von 12 V bis 42 V liefert.

15. Anordnung nach einem der Ansprüche 1 bis 14, **dadurch gekennzeichnet, dass** die mindestens eine Heizeinrichtung (10) mindestens zwei Heizplatten (12) vorzugsweise unterschiedlicher Größe aufweist, denen jeweils ein eigener Satz Betriebsparameter zugeordnet ist.

16. Anordnung nach einem der Ansprüche 1 bis 15, **dadurch gekennzeichnet, dass** die Prozessdaten im Anschluss an den Erwärmungsvorgang aus dem Schreib-/Lese-Speicher (54) in einen externen Computer auslesbar sind.

17. Anordnung nach einem der Ansprüche 1 bis 16, **dadurch gekennzeichnet, dass** der Microcontroller eine Microcontrollerroutine zur Ermittlung eines nach Maßgabe vorgegebener Betriebsparameter errechneten theoretischen Temperatur/Zeitverlaufs und zum Vergleich mit den gemessenen Ist-Werten enthält, wobei bei Auftreten einer über oder unter einem vorgegebenen Schwellenwert liegenden Abweichung ein Alarm auslösbar ist.

18. Verfahren zum Regenerieren von vorgegarten und auf eine Lagertemperatur abgekühlten Speisen durch Wärmezufuhr über eine mit einem Speisetablett verbundene transportable Heizeinrichtung, **dadurch gekennzeichnet, dass** vor Beginn eines Erwärmungsvorgangs Betriebsparameter drahtlos über je einen am Speisetablett angeordneten Transponder in einen der Heizeinrichtung und dem zugehörigen Speisetablett zugeordneten Schreib-/Lese-Speicher (54) eingelesen werden, dass während des Erwärmungsvorgangs die Temperatur einzelner Heizplatten der Heizeinrichtung (10) in Abhängigkeit von der Zeit gemessen wird, und dass die gemessenen Temperaturwerte in Abhängigkeit von der Zeit in einem Schreib-/Lese-Speicher (54) in extern abrufbarer Form abgelegt werden.

19. Verfahren nach Anspruch 18, **dadurch gekennzeichnet, dass** die einen Speisebehälter (16', 16") tragenden Heizplatten (12) bis zu einer durch die Betriebsparameter vorgegebenen Maximaltemperatur bei maximaler Heizleistung aufgeheizt werden, wobei die vorgegebene Maximaltemperatur während einer Garphase über eine durch die Betriebsparameter vorgegebene Zeit durch Variation des Tastverhältnisses "Heizen/Heizpause" der Wärmezufuhr konstant gehalten wird, wobei anschließend durch Reduzieren des Tastverhältnisses "Heizen/Heizpause" während einer Warmhaltephase die Temperatur auf eine gegenüber der Gartemperatur abgesenkten Warmhaltetemperatur reduziert wird.

20. Verfahren nach Anspruch 18 oder 19, **dadurch gekennzeichnet, dass** die Steigung der gemessenen Temperatur/Zeit-Kurve während der Aufheizphase ermittelt und mit aufgrund vorgegebener Betriebsparameter errechneter Sollwerte unter Bildung eines Abweichungswertes verglichen wird, und dass bei Über- oder Unterschreiten eines vorgegebenen Schwellenwerts durch den Abweichungswert eine Alarmroutine ausgelöst wird.

21. Verfahren nach einem der Ansprüche 18 bis 20, **dadurch gekennzeichnet, dass** in den Schreib-/Lese-Speicher (54) individuelle Konsumentendaten über den Transponder in abrufbarer Form abgelegt werden.

22. Verfahren nach einem der Ansprüche 18 bis 21, **dadurch gekennzeichnet, dass** in den Schreib-/Lese-Speicher (54) individuelle Speiseabgabedaten abgelegt und über den Transponder (48) von einer Speiseabgabeeinheit (60) abgerufen und zur positions- und mengengerechten Speisenabgabe auf Gar- oder Stellplätze des Speisetabletts und dessen Heizeinrichtung verarbeitet werden.

## Claims

1. Arrangement for heating food with a food distribution trolley for receiving at least one heating device (10) connected via a connection to an external power supply and at least one food tray, as well as with at least one control device containing a microcontroller for the automatic control of the heating process, which device comprises an externally actuatable transponder, which is connected to a read/write memory (54) that can also be written to and read by the microcontroller, **characterized in that** the food tray bears a heating device (10) comprising at least one hot plate with microcontroller and read/write memory (54) as well as a transponder (48), and that a computer-aided transceiver (52) communicates via the transponder (48) of the food tray with the related read/write memory (54), exchanging operating and individual parameters as well as process data of the heating process.

2. Arrangement according to claim 1, **characterized in that** the transceiver (52) is connected to an external programming and reading unit (50).

3. Arrangement according to claim 1, **characterized in that** the transceiver (52) is connected to an external food dispensing unit (60), which has a system responding to data from the read/write memories of the food trays for the position- and quantity-controlled dispensing of meals and/or drinks to the food tray (14).

4. Arrangement according to one of claims 1 to 3, **characterized in that** the at least one hot plate (12) of the heating device has a metal plate (18) of high thermal conductivity, laminated onto which is an electrically insulating film (20) with printed conductor structure (22) forming a heating resistor in two-dimensionally extended thermal contact.

5. Arrangement according to claim 4, **characterized in that** the metal plate (18) contains a metal from the group copper or aluminium or consists of this.

6. Arrangement according to claim 4 or 5, **characterized in that** the metal plate (18) has a wall thickness of 1 mm to 5 mm.

7. Arrangement according to claim 6, **characterized in that** the wall thickness is 2 mm to 3 mm.

8. Arrangement according to one of claims 1 to 7, **characterized in that** the heating device (10) has a base plate (37) for receiving the at least one hot plate (12) and the control device (38).

9. Arrangement according to one of claims 1 to 8, **characterized in that** the heating device (10) is arranged with its base plate (37) interchangeably in the food tray formed as an insulating body.

10. Arrangement according to claim 9, **characterized in that** the insulating body has a receiving trough (42) adapted to the contour of the base plate (37).

11. Arrangement according to one of claims 1 to 10, **characterized in that** the hot plate (12) bears a temperature sensor (29), which is connected via a measuring circuit to the related microcontroller (30).

12. Arrangement according to claim 11, **characterized in that** the temperature sensor (29) is arranged in the centre of the hot plate (12) and is connected to the measuring circuit via conductors printed on the film (20).

13. Arrangement according to one of claims 1 to 12, **characterized in that** the power supply (34) of the at least one heating device (10) has a constant voltage source, the heating current of which can be switched on and off in a pulsed manner with variation of the heat output via a switch (36) arranged in the heating circuit and actuatable by the respective microcontroller (30).

14. Arrangement according to claim 13, **characterized in that** the constant voltage source supplies a constant voltage of 12 V to 42 V independent of the current.

15. Arrangement according to one of claims 1 to 14, **characterized in that** the at least one heating device (10) has at least two hot plates (12) preferably of different size, assigned to each of which is its own set of operating parameters.

16. Arrangement according to one of claims 1 to 15, **characterized in that** the process data in connection with the heating process can be read from the read/write memory (54) into an external computer.

17. Arrangement according to one of claims 1 to 16, **characterized in that** the microcontroller contains a microcontroller routine for determining a theoretical temperature/time curve calculated according to predetermined operating parameters and for comparison with the measured actual values, an alarm being triggerable if a deviation lying above or below a predetermined threshold value occurs.

18. Method for the regeneration of precooked food chilled to a storage temperature by supplying heat via a mobile heating device connected to a food tray, **characterized in that** prior to the start of a heating process, operating parameters are read wirelessly via a transponder arranged on the food tray in each case into a read/write memory (54) assigned to the heating device and the related food tray, that during the heating process the temperature of individual hot plates of the heating device (10) is measured as a function of time, and that the temperature values measured as a function of time are filed in a read/write memory (54) in externally retrievable form.

19. Method according to claim 18, **characterized in that** the hot plates (12) carrying a food container (16', 16") are heated up to a maximum temperature predetermined by the operating parameters at maximum heating power, the predetermined maximum temperature being kept constant during a cooking phase over a time predetermined by the operating parameters by variation of the duty factor "heating/heating pause" of the heat supply, the temperature then being reduced by reduction of the duty factor "heating/heating pause" during a keeping-warm phase to a keeping-warm temperature that is lowered compared with the cooking temperature.

20. Method according to claim 18 or 19, **characterized in that** the increase in the measured temperature/time curve is determined during the heating phase and compared with target values calculated on the basis of predetermined operating parameters with formation of a deviation value, and that in the event that the deviation value exceeds or falls below a predetermined threshold value, an alarm routine is triggered.

21. Method according to one of claims 18 to 20, **characterized in that** individual consumer data are filed in retrievable form in the read/write memory (54) via the transponder.

22. Method according to one of claims 18 to 21, **characterized in that** individual food dispensing data are filed in the read/write memory (54) and are retrieved by a food dispensing unit (60) via the transponder (48) and are processed for position- and quantity-compatible food dispensing to cooking or storage positions of the food tray and its heating device.

## Revendications

1. Dispositif pour chauffer des aliments, comprenant un chariot de distribution d'aliments pouvant recevoir au moins un dispositif de chauffage (10) raccordé à une alimentation électrique externe via un raccordement et au moins un plateau-repas, ainsi que comprenant au moins un dispositif de régulation contenant un microcontrôleur pour le contrôle automatique du processus de réchauffage, qui comprend un transpondeur pouvant être commandé de l'extérieur qui est relié à une mémoire à lecture et écriture (54) pouvant aussi être écrite et lue par le microcontrôleur, **caractérisé en ce que** le plateau-repas porte un dispositif de chauffage (10) composé d'au moins une plaque chauffante avec microcontrôleur et mémoire à lecture et écriture (54), ainsi qu'un transpondeur (48), et qu'un émetteur-récepteur (52) assisté par ordinateur communique via le transpondeur (48) du plateau-repas avec la mémoire à lecture et écriture (54) associée en échangeant des paramètres de fonctionnement et des paramètres individuels ainsi que des données de processus du processus de réchauffage.

2. Dispositif selon la revendication 1, **caractérisé en ce que** l'émetteur-récepteur (52) est relié à une unité de lecture et programmation externe (50).

3. Dispositif selon la revendication 1, **caractérisé en ce que** l'émetteur-récepteur (52) est relié à une unité de distribution d'aliments externe (60) qui présente un système réagissant à des données provenant de la mémoire à lecture et écriture des plateaux-repas pour la distribution d'aliments et/ou de boissons commandée en position et en quantité sur le plateau-repas (14).

4. Dispositif selon l'une des revendications 1 à 3, **caractérisé en ce que** ladite au moins une plaque chauffante (12) du dispositif de chauffage présente une plaque métallique (18) à haute conductibilité thermique sur laquelle est contrecollé, en contact thermique plan étendu avec elle, un film (20) électriquement isolant avec une structure de piste conductrice imprimée (22) formant une résistance chauffante.

5. Dispositif selon la revendication 4, **caractérisé en ce que** la plaque métallique (18) contient un métal du groupe cuivre ou aluminium ou est réalisée dans l'un de ces métaux.

6. Dispositif selon la revendication 4 ou 5, **caractérisé en ce que** la plaque métallique (18) présente une épaisseur de paroi de 1 mm à 5 mm.

7. Dispositif selon la revendication 6, **caractérisé en ce que** l'épaisseur de paroi est de 2 mm à 3 mm.

8. Dispositif selon l'une des revendications 1 à 7, **caractérisé en ce que** le dispositif de chauffage (10) présente une plaque de base (37) pour la réception de ladite au moins une plaque chauffante (12) et du dispositif de régulation (38).

9. Dispositif selon l'une des revendications 1 à 8, **caractérisé en ce que** le dispositif de chauffage (10) avec sa plaque de base (37) est disposé de manière échangeable dans le plateau-repas réalisé sous forme de corps isolant.

10. Dispositif selon la revendication 9, **caractérisé en ce que** le corps isolant présente un logement de réception (42) adapté au contour de la plaque de base (37).

11. Dispositif selon l'une des revendications 1 à 10, **caractérisé en ce que** la plaque chauffante (12) porte un capteur de température (29) qui est raccordé par un circuit de mesure au microcontrôleur (30) associé.

12. Dispositif selon la revendication 11, **caractérisé en ce que** le capteur de température (29) est disposé au centre de la plaque chauffante (12) et relié au circuit de mesure par des pistes conductrices imprimées sur le film (20).

13. Dispositif selon l'une des revendications 1 à 12, **caractérisé en ce que** l'alimentation électrique (34) dudit au moins un dispositif de chauffage (10) présente une source de tension constante dont le courant de chauffage peut être activé et désactivé de manière pulsée par un commutateur (36) disposé dans le circuit de chauffage, pouvant être commandé par le microcontrôleur (30), en faisant varier la puissance de chauffage.

14. Dispositif selon la revendication 13, **caractérisé en ce que** la source de tension constante délivre une tension constante, indépendante du courant, de 12 V à 42 V.

15. Dispositif selon l'une des revendications 1 à 14, **caractérisé en ce que** ledit au moins un dispositif de chauffage (10) présente au moins deux plaques chauffantes (12) de préférence de taille différente, auxquelles est chaque fois associé un jeu de paramètres de fonctionnement propre.

16. Dispositif selon l'une des revendications 1 à 15, **caractérisé en ce que** les données de processus peuvent être lues dans la mémoire à lecture et écriture (54) et transférées dans un ordinateur externe à la suite du processus de réchauffage.

17. Dispositif selon l'une des revendications 1 à 16, **caractérisé en ce que** le microcontrôleur contient une routine de microcontrôleur pour déterminer une courbe de température/temps calculée théoriquement en fonction de paramètres de fonctionnement prédéfinis et pour sa comparaison avec les valeurs réelles mesurées, une alarme étant déclenchable en cas de survenue d'un écart situé au-dessus ou au-dessous d'une valeur seuil prédéfinie.

18. Procédé pour régénérer des aliments précuits et refroidis à une température de stockage par apport de chaleur au moyen d'un dispositif de chauffage transportable relié à un plateau-repas, **caractérisé en ce que**, avant le début d'un processus de réchauffage, des paramètres de fonctionnement sont chargés sans fil, via un transpondeur disposé sur chaque plateau-repas, dans une mémoire à lecture et écriture (54) associée au dispositif de chauffage et au plateau-repas correspondant, que pendant le processus de réchauffage la température de certaines plaques chauffantes du dispositif de chauffage (10) est mesurée en fonction du temps et que les valeurs de température mesurées sont stockées en fonction du temps dans une mémoire à lecture et écriture (54) sous une forme pouvant être appelée de l'extérieur.

19. Procédé selon la revendication 18, **caractérisé en ce que** les plaques chauffantes (12) portant un récipient à aliment (16', 16") sont réchauffées à puissance de chauffage maximale à une température maximale prédéfinie par les paramètres de fonctionnement, la température maximale prédéfinie étant maintenue constante pendant une phase de cuisson sur une durée prédéfinie par les paramètres de fonctionnement par variation du rapport cyclique « chauffe/pause de chauffe » de l'apport de chaleur, la température étant ensuite réduite à une température inférieure à la température de cuisson par diminution du rapport cyclique « chauffe/pause de chauffe » pendant une phase de maintien au chaud.

20. Procédé selon la revendication 18 ou 19, **caractérisé en ce que** la pente de la courbe de température/temps mesurée pendant la phase de réchauffage est déterminée et comparée avec des valeurs de consigne déterminées sur la base de paramètres de fonctionnement prédéfinis avec formation d'une valeur d'écart, et qu'une routine d'alarme est déclenchée si la valeur d'écart dépasse vers le haut ou vers le bas une valeur seuil prédéfinie.

21. Procédé selon l'une des revendications 18 à 20, **caractérisé en ce que** des données de consommateur individuelles sont stockées via le transpondeur dans la mémoire à lecture et écriture (54) sous une forme pouvant être appelée.

22. Procédé selon l'une des revendications 18 à 21, **caractérisé en ce que** des données de distribution d'aliments individuelles sont stockées dans la mémoire à lecture et écriture (54) et appelées via le transpondeur (48) par une unité de distribution d'aliments (60) et traitées en vue de la distribution d'aliments commandée en position et en quantité à des emplacements de cuisson ou de rangement du plateau-repas et de son dispositif de chauffage.
